(19) Europäisches Patentamt
European Patent Office
Office européen des brevets

(11) **EP 4 779 583 A1**

(12) **EUROPEAN PATENT APPLICATION**
published in accordance with Art. 153(4) EPC

(43) Date of publication:
**22.07.2026 Bulletin 2026/30**

(21) Application number: **24865067.3**

(22) Date of filing: **17.07.2024**

(51) International Patent Classification (IPC):
*G06V 10/774* (2022.01)    *G06N 20/00* (2019.01)
*G06T 7/00* (2017.01)    *G06V 10/82* (2022.01)
*G08G 1/16* (2006.01)

(52) Cooperative Patent Classification (CPC):
**G06N 20/00; G06T 7/00; G06V 10/774;**
**G06V 10/82; G08G 1/16**

(86) International application number:
**PCT/JP2024/025659**

(87) International publication number:
**WO 2025/057560 (20.03.2025 Gazette 2025/12)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **12.09.2023 JP 2023147697**

(71) Applicant: **Astemo, Ltd.**
**Chiyoda-ku,**
**Tokyo 1000004 (JP)**

(72) Inventors:
• **ITO, Hiroaki**
  **Hitachinaka-shi, Ibaraki 312-8503 (JP)**
• **KISHIMOTO, Tadashi**
  **Hitachinaka-shi, Ibaraki 312-8503 (JP)**
• **KOMATSU, Sakie**
  **Hitachinaka-shi, Ibaraki 312-8503 (JP)**

(74) Representative: **Grünecker Patent- und**
**Rechtsanwälte**
**PartG mbB**
**Leopoldstraße 4**
**80802 München (DE)**

(54) **AI MODEL TRAINING SYSTEM AND AI MODEL TRAINING METHOD**

(57)    In the present invention, a system includes an AI inference processing unit (12A) performing inference processing of input data using an AI model, an AI verification unit (13A) acquiring the input data, as consideration data, when the inference processing by the AI inference processing unit (12A) is not correctly performed, a feature amount extraction unit (13B) extracting a feature amount of the consideration data, a similar data collection unit (14A) collecting similar data that is similar to the feature amount, and an AI learning unit (15B) relearning the AI model using the similar data collected by the similar data collection unit (14A). According to the present invention, for the input data whose AI inference processing was not performed correctly, the feature amount of this input data is extracted, and the similar data similar to this feature amount is collected from the other and relearned, thereby appropriately collecting necessary recognition data.

FIG.1

Description

## TECHNICAL FIELD

The present invention relates to an AI model learning system and an AI model learning method for an autonomous driving device that automatically drives a vehicle such as an automobile.

## BACKGROUND ART

Recently, there has been progress in the development of autonomous driving, which allows automobiles to drive autonomously. To execute this autonomous driving, it is effective to control the driving (travel) of the automobile using AI function. In order to realize the travel control of the automobile with high inference accuracy using an AI model mounted on the automobile, it is important to verify and analyze the AI model, particularly a recognition model, by using a sufficient amount of recognition data. Here, the recognition data is typically, for instance, image data. In the following description, as a representative example, the image data will be described.

In the verification and analysis of this AI model, in order to ensure driving safety, it is necessary to exhaustively or comprehensively collect image data under various actual driving conditions (various actual travel conditions) by spending an enormous amount of time. In particular, in order to enable the automobile to drive autonomously, image data of travelling environment under various driving conditions (various travel conditions) are required. For this reason, while making the automobile actually travel, the image data are collected, verified, and analyzed.

However, in general, when collecting the image data, image data of scenes that are easy to shoot (to photograph) are collected in large quantities, but image data of scenes that are different from normal are not collected. Therefore, since various image data are not exhaustively or comprehensively collected, sufficient or thorough verification and analysis of the image data cannot be performed, which has become a problem.

In order to solve such a situation, as a technique of exhaustively or comprehensively collecting the image data, for instance, a technique disclosed in Patent Document 1 (WO2022/107595) has been known.

Patent Document 1 discloses that, for the purpose of efficiently relearning a recognition model, a system includes a collection timing control unit that controls a timing of collecting image data candidates that are candidates for image data to be used for the relearning of the recognition model, and an image data collection unit that selects image data from among the collected image data candidates on the basis of at least one of characteristics of the image data candidates and the similarity with stored image data.

Here, the recognition model is used to recognize a predetermined recognition target (hereinafter, also referred to as an object or a landmark) around the automobile, and the image data collection unit selects appropriate image data from among the image data candidates including image data obtained by shooting (photographing) the surroundings of the automobile by an image shooting means, such as a camera, installed in the automobile.

## CITATION LIST

### PATENT DOCUMENT

Patent Document 1: Internal Publication No. 2022/107595

## SUMMARY OF THE INVENTION

### TECHNICAL PROBLEM

Incidentally, an image data collection method disclosed in Patent Document 1 determines whether to collect image data on the basis of a certain external event (e.g. an event such as an occurrence of construction work, an occurrence of an accident, a rainfall state, and a snowfall state), and classifies the image data collected based on this external event, according to an output result (reliability) of the recognition model.

However, in a case of this image data collection method, unless a corresponding external event is accidentally encountered, it is not possible to collect the image data. In addition, in the case of this image data collection method, even image data that is not necessary is uniformly collected, which results in unnecessary or needless verification and analysis. From such a background, it is required to appropriately collect necessary image data.

An object of the present invention is therefore to provide an AI model learning system and an AI model learning method that are capable of appropriately collecting necessary image data for relearning to verify and analyze the AI model.

## SOLUTION TO PROBLEM

In the present invention, an AI model learning system for relearning an AI model comprises: an AI inference processing unit configured to perform inference processing of input data using the AI model; an AI verification unit configured to acquire the input data, as consideration data, when the inference processing by the AI inference processing unit is not correctly performed; a feature amount extraction unit configured to extract a feature amount of the consideration data; a similar data collection unit configured to collect similar data that is similar to the feature amount; and an AI learning unit configured to relearn the AI model using the similar data collected by the similar data collection unit.

## EFFECTS OF INVENTION

According to the present invention, for the input data whose AI inference processing was not performed correctly, the feature amount of this input data is extracted, and the similar data that is similar to this feature amount is collected from the other and relearned, thereby appropriately collecting necessary image data.

## BRIEF DESCRIPTION OF THE DRAWINGS

Fig. 1 is an explanatory diagram describing a concept of an AI model learning system according to the present invention.
Fig. 2 is a block diagram showing a configuration of an AI model learning system according to a first embodiment of the present invention.
Fig. 3 is a flow chart showing a control flow of the AI model learning system according to the first embodiment of the present invention.
Fig. 4 is an explanatory diagram describing examples of a recognition error when recognizing objects (landmarks) from image data by an AI model.
Fig. 5 is a flow chart showing a first control flow for extracting a recognition error region (s) of the object (s) (the landmark(s)) shown in Fig. 4.
Fig. 6 is a flow chart showing a second control flow for extracting a recognition error region (s) of the object (s) (the landmark(s)) shown in Fig. 4.
Fig. 7 is a flow chart showing a third control flow for extracting a recognition error region (s) of the object (s) (the landmark(s)) shown in Fig. 4.
Fig. 8 is an explanatory diagram showing an example of extracting a feature amount from a feature amount extraction unit by a neural network.
Fig. 9 is a flow chart showing a control flow when searching for similar image data in a vehicle-side control device.
Fig. 10 is a control flow chart for determining validity of the similar image data from the vehicle-side control device.
Fig. 11 is a control flow chart showing a first control flow for selecting similar image data used for the relearning.
Fig. 12 is a control flow chart showing a second control flow for selecting similar image data used for the relearning.
Fig. 13 is a control flow chart showing a third control flow for selecting similar image data used for the relearning.

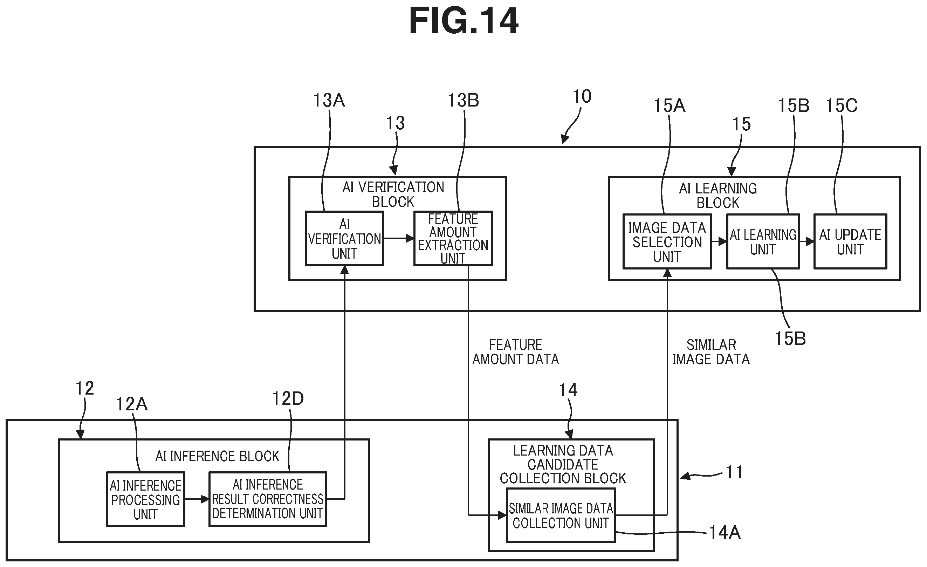

Fig. 14 is a block diagram showing a configuration of an AI model learning system according to a second embodiment of the present invention.

## EMBODIMENTS FOR CARRYING OUT THE INVENTION

Embodiments of the present invention will be described in detail below with reference to the drawings. However, the present invention is not limited to the following embodiments, and various modifications and application examples in a technical concept of the present invention are also included within the scope of the present invention.

## First Embodiment

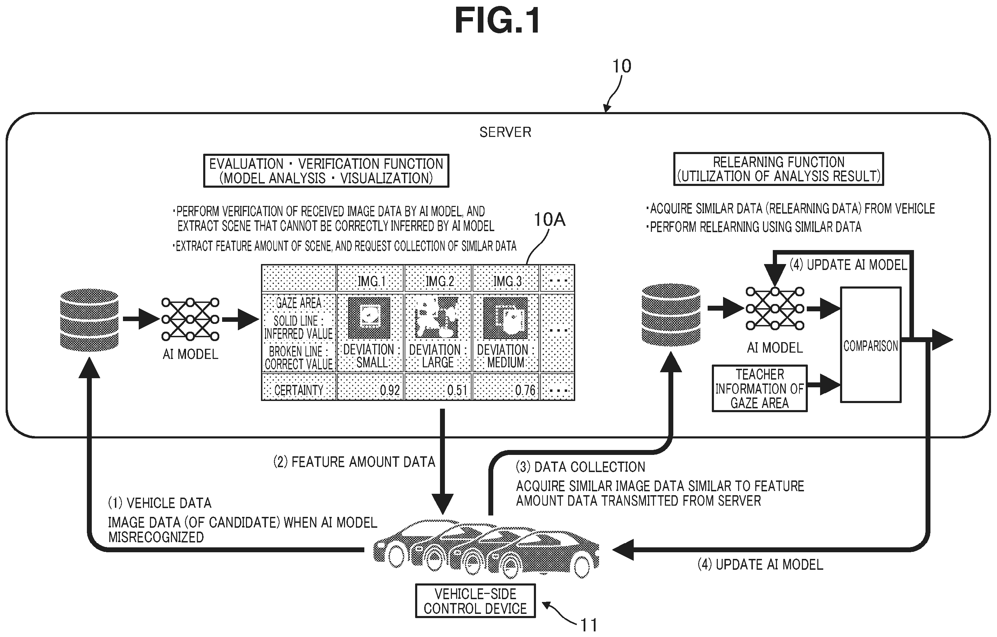

Fig. 1 illustrates a configuration of an AI learning system for describing a concept of a first embodiment of the present invention. In the present embodiment, the system is configured from a server 10 in which a server-side control unit having an AI function unit is mounted, each vehicle (here, each automobile) on which a vehicle-side control device 11 having an AI function unit is mounted, and a communication unit (not shown) provided in each of the server 10 and the vehicle so that the server 10 and the vehicle can communicate with each other wirelessly.

As will be described later, the vehicle-side control device 11 has the function of, in response to a request from the server 10, searching for similar data that is similar to (including, identical with or match) input data that cannot be inferred by an AI model, and providing the similar data to the server 10.

Here, the AI function unit of the server 10 is equipped with an AI model (here, a recognition model) to be verified. In addition, the AI function unit of the vehicle-side control device 11 is a current AI function unit that can autonomously drive the vehicle. Recognition data here is image data used for recognition of a predetermined recognition target (s) (an object (s), a landmark (s), etc.) around the vehicle. The recognition targets are objects such as other vehicles around own vehicle (host vehicle), pedestrians, bicycles, and traffic signs, which are required for the autonomous driving.

Now, the vehicle-side control device 11 transmits image data that may have been misrecognized by its own AI model to the server 10 via the communication unit. The image data at this time is considered to be a candidate for recognition error. The server-side control unit of the server 10 has at least two functions of an "evaluation and verification function unit" and a "relearning function unit".

The "evaluation and verification function unit" has the function of model analysis and model visualization, and is configured so that a developer and a designer can verify an analysis result on a screen. In the model analysis, verification of the received image data is performed by the AI model, and a scene (a region or an area) in which an object(s) in the image data cannot be correctly inferred by the AI model is extracted.

For instance, as an example, image 10A shows a deviation of each gaze area (each gaze region). Image (IMG. 1 to IMG. 3) shows the deviation of an inferred value (shown by a solid line) from a correct value (shown by a broken line) of the gaze area. The deviation of the image (IMG.1) is small, and a certainty is 0.92. The deviation of the image (IMG.2) is large, and a certainty is 0.51. The deviation of the image (IMG.3) is a medium deviation, and a certainty is 0.76. Therefore, for instance, the image (IMG.2) is considered that the gaze area has not been correctly inferred.

Then, a feature amount of the scene that cannot be correctly inferred is extracted, and data of this feature amount is transmitted to the vehicle-side control devices 11 of many other vehicles. Here, the other vehicle-side control devices 11 are not subject to geographical constraints, and data of the feature amount is transmitted to vehicles located, for example, in the country. This makes it possible to expand a range (an area) in which image data similar to the feature amount of the scene that cannot be correctly inferred exists.

On the other hand, many other vehicle-side control devices 11 search for image data (hereinafter, referred to as similar image data) that is similar to the transmitted feature amount, from among feature amounts of image data held in the vehicle-side control devices 11 themselves. If the similar image data is (are) present, many other vehicle-side control devices 11 transmit the respective similar image data to the server-side control unit of the server 10 again via the respective communication units.

The "relearning function unit" of the server-side control unit executes the relearning function using the received similar image data. The "relearning function unit" infers the collected similar image data by the AI model, and if it satisfies teacher information, the similar image data is determined as learning data. Here, the teacher information is given by the developer or the designer. When the relearning is completed, update of the AI model for the vehicle-side control device 11 is executed. Update of the AI model is performed as necessary. Update of the AI model could also be reflected in the next autonomous driving device as an upgraded version of the AI model.

Here, the "evaluation and verification function unit" and the "relearning function unit" could be provided in the same server 10, or may be separately provided in different servers 10. For instance, the "evaluation and verification function unit" may be provided in the server 10 of a parts manufacturer that manufactures the vehicle-side control device 11, whereas the "relearning function unit" may be provided in a vehicle manufacturer that manufactures the vehicle.

In this manner, for the image data whose AI inference processing was not performed correctly, the feature amount of this image data is extracted, and the similar image data that is similar to this feature amount is collected from the other vehicle(s) and relearned, thereby appropriately collecting necessary image data.

Next, the specific configuration and operation of the concept of the present embodiment illustrated in Fig. 1 will be described below with reference to the drawings. In the following description, the "evaluation and verification function unit" and the "relearning function unit" will be described as being provided in the same server 10.

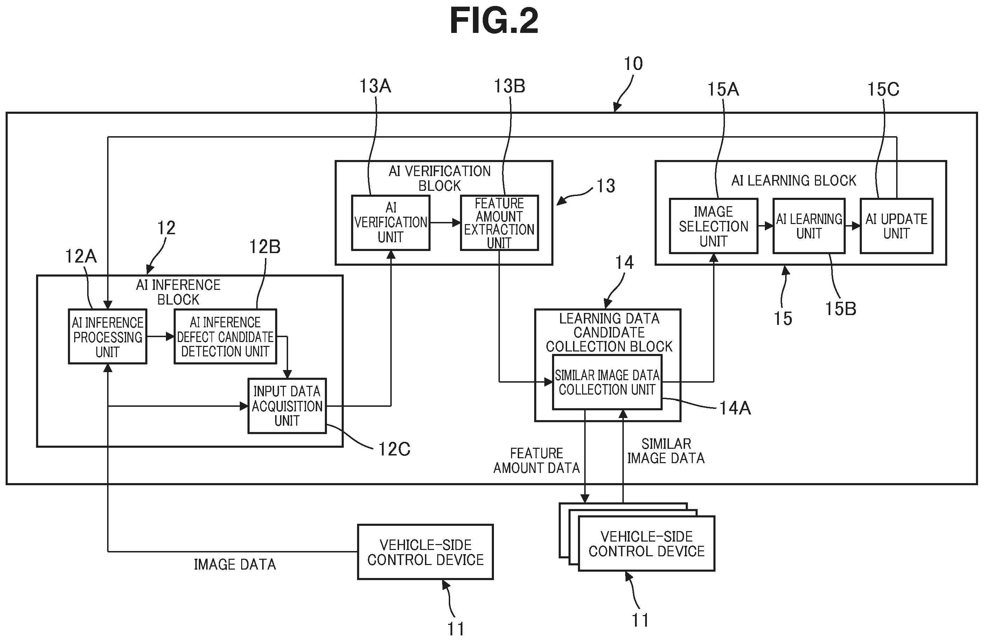

Fig. 2 illustrates control blocks of an AI model learning system. These control blocks are constructed in the server-side control unit of the server 10. The control blocks are configured from hardware such as a computer and logic circuits, software for executing operations of the computer, and the like. Therefore, the control blocks can be considered as function blocks.

In Fig. 2, the AI model learning system according to the present embodiment includes an AI inference block 12 that performs inference processing of input image data by a recognition model, an AI verification block 13 that verifies the correctness of the inference processing by this recognition model, a learning data candidate collection block 14 that collects learning data candidates that are similar image data, and an AI learning block 15 that performs relearning of the AI using the learning candidate data collected by the learning data candidate collection block 14. It is noted that "block" can also be read as "function unit".

The AI inference block 12 includes at least an AI inference processing unit 12A, an AI inference defect candidate detection unit 12B, and an input data acquisition unit 12C.

The AI inference processing unit 12A infers a candidate for image data that is likely to be an object (a target), for instance, from among input image data. This image data is sent to the AI inference defect candidate detection unit 12B, and the image data that may have not been subjected to the inference processing correctly is detected by the AI inference defect candidate detection unit 12B. The input data acquisition unit 12C acquires the image data that may have not been subjected to the inference processing correctly, and inputs it to the AI verification block 13.

The AI verification block 13 includes at least an AI verification unit 13A, and a feature amount extraction unit 13B.

The AI verification unit 13A determines whether or not the object (the target) of the image data that may have not been subjected to the inference processing correctly is different from a correct value, and whether or not the object (the target) of the image data that may have not been subjected to the inference processing correctly satisfies a threshold value, etc. Here, the correct value and the threshold value are set by the developer or the designer. If it is determined that the object (the target) is different from the correct value, and that the object (the target) does not satisfy the threshold value, a region (an area) where this object (this target) exists is set as a feature amount extraction region.

Next, the feature amount extraction unit 13B extracts a feature amount of the object (the target) from image data of the set feature amount extraction region. Here, the extraction of the feature amount is the same as a well-known method in image processing. The feature amount extraction unit 13B inputs the extracted feature amount data to the learning data candidate collection block 14.

The learning data candidate collection block 14 includes at least a similar image data collection unit 14A.

The similar image data collection unit 14A wirelessly transmits (e.g. push transmission or scheduled transmission) at least the feature amount data output from the feature amount extraction unit 13B, and search request data of similar image data having a feature amount that is similar to the feature amount data output from the feature amount extraction unit 13B, to other vehicles equipped with the autonomous driving device. Here, other vehicles are vehicles that are not subject to geographical constraints, and that are located in a wide area (for example, city units, prefecture units, and all Japan).

Therefore, it is possible to increase the possibility that similar image data exists. In addition, since the similar image data can be obtained from database stored in each vehicle, the readiness can also be enhanced.

The vehicle-side control device 11 mounted on each of other vehicles searches for image data having a feature amount that is similar to the transmitted feature amount data, from among image data stored in its own storage unit (the database). If the corresponding image data is present, the vehicle-side control device 11 returns this image data to the similar image data collection unit 14A by wireless transmission. If there is no corresponding image data, reply data indicating that there is no corresponding image data is wirelessly transmitted to the similar image data collection unit 14A. The similar image data may be one or more. The similar image data collection unit 14A transmits the collected similar image data to the AI learning block 15 as learning image data.

The AI learning block 15 includes at least an image selection unit 15A, an AI learning unit 15B, and an AI update unit 15C.

The image selection unit 15A selects, as learning data, the similar image data transmitted from the similar image data collection unit 14A. This selection is performed by determining whether or not the similar image data is different from a correct value, and whether or not the similar image data satisfies a threshold value. Here, the correct value and the threshold value are set by the developer or the designer. If it is determined that the similar image data is different from the correct value, and the similar image data does not satisfy the threshold value, the similar image data is sent to the AI learning unit 15B as the learning data.

The AI learning unit 15B performs well-known relearning using the selected similar image data. After this relearning, the AI model (here, the recognition model) is updated by the AI update unit 15C. The updated AI model is fed back to the AI inference processing unit 12A of the AI inference block 12, and the AI model of the AI inference processing unit 12A is updated.

It is noted that when image data is input from the AI inference block 12 to the AI verification block 13, on condition that the consent of user is obtained in advance, an image data storage function unit that stores the image data that is input to the AI verification block 13 is provided in the vehicle-side control device 11 in the own vehicle. Also, when the AI model of the vehicle-side control device 11 is updated by the AI model relearned in the AI learning block 15, an improvement effect confirmation function unit, by which an effect of improvement in the image data stored in the own vehicle by the updated AI model can be confirmed by the user, is provided in the vehicle-side control device 11.

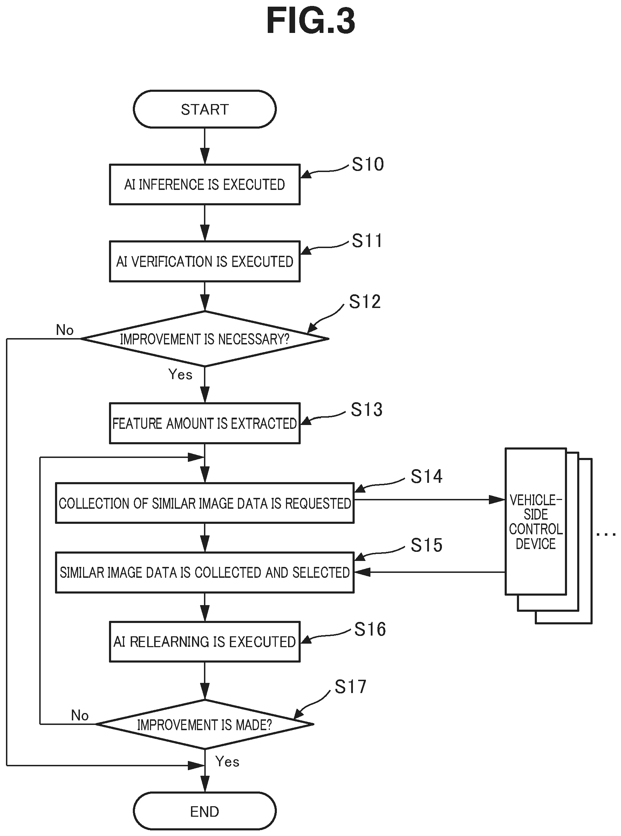

The operations of the control blocks described above are actually executed by arithmetic processing by the computer constituting the server-side control unit. Next, a control flow of the relearning of similar image data by the computer will be described with reference to Fig. 3.

<<Step S10>>

In step S10, an AI inference is executed. For this inference, the unit infers a candidate for image data that is likely to be an object (a target) from among input image data. Then, from this image data, the image data that may have not been subjected to the inference processing correctly is detected. If the image data that was not subjected to the inference processing correctly is detected, the processes of steps S11 and S12 are executed.

<<Step S11>> and <<Step S12>>

In steps S11 and S12, the unit determines whether or not the object (the target) of the image data that may have not been subjected to the inference processing correctly is different from a correct value, and whether or not the object (the target) of the image data that may have not been subjected to the inference processing correctly satisfies a threshold value, etc. Here, the correct value and the threshold value are set by the developer or the designer.

If it is determined that the object (the target) is different from the correct value, and the object (the target) does not satisfy the threshold value, since the improvement is judged to be necessary, a region (an area) where this object (this target) exists is set as a feature amount extraction region. Detailed description of AI verification steps in steps S11 and S12 will be described later.

When the feature amount extraction region is set, the process in step S13 is executed. Here, if it is determined in step S12 that no improvement is necessary, the process exits to the end, and waits for the next start timing.

<<Step S13>>

In step S13, the unit extracts a feature amount of the object (the target) that may have not been subjected to the inference processing correctly from image data of the feature amount extraction region set in step S12. This extraction of the feature amount is the same as a well-known method in image processing. When the feature amount is extracted, the process of step S14 is executed.

<<Step S14>>

In step S14, the unit requests the vehicle-side control devices 11 of many other vehicles to collect similar image data. This request is executed by wirelessly transmitting (e.g. push transmission or scheduled transmission) the feature amount data determined in step S13, and search request data of similar image data having a feature amount that is similar to the feature amount data determined in step S13, to other vehicles equipped with the autonomous driving device. Details of the search process of the vehicle-side control device 11 will be described later.

After the request in step S14, if the vehicle-side control device 11 returns the similar image data, the process of step S15 is executed. Here, since it is expected that the similar image data is returned from many other vehicle-side control devices 11, the received similar image data may be stored and step S15 may be executed at a predetermined timing.

<<Step S15>>

In step S15, the collected similar image data is analyzed to determine whether it is appropriate image data, and appropriate similar image data is selected. This selection is performed by determining whether or not the similar image data is different from a correct value, and whether or not the similar image data satisfies a threshold value. The correct value and the threshold value are set by the developer or the designer. If it is determined that the similar image data is different from the correct value, and the similar image data does not satisfy the threshold value, the similar image data is treated as learning data. Details of the similar image data selection process in step S15 will be described later. When the similar image data is selected, the processes of steps S16 and S17 are executed.

<<Step S16>> and <<Step S17>>

In step S16, the unit performs well-known relearning using the selected similar image data. Here, at the time of executing the relearning, a recognition result of the object (the target) is re-verified in step S17. If a re-verification result shows that the recognition is not correctly performed and the inference result has not been improved, the routine is returned to step S14, and the same processing steps are executed again. On the other hand, the re-verification result shows that the recognition is correctly performed and the inference result has been improved, the process exits to the end, and waits for the next start timing.

The above is the configuration of the AI model learning system according to the present embodiment. Next, main processing functions in the above-mentioned control flow will be described.

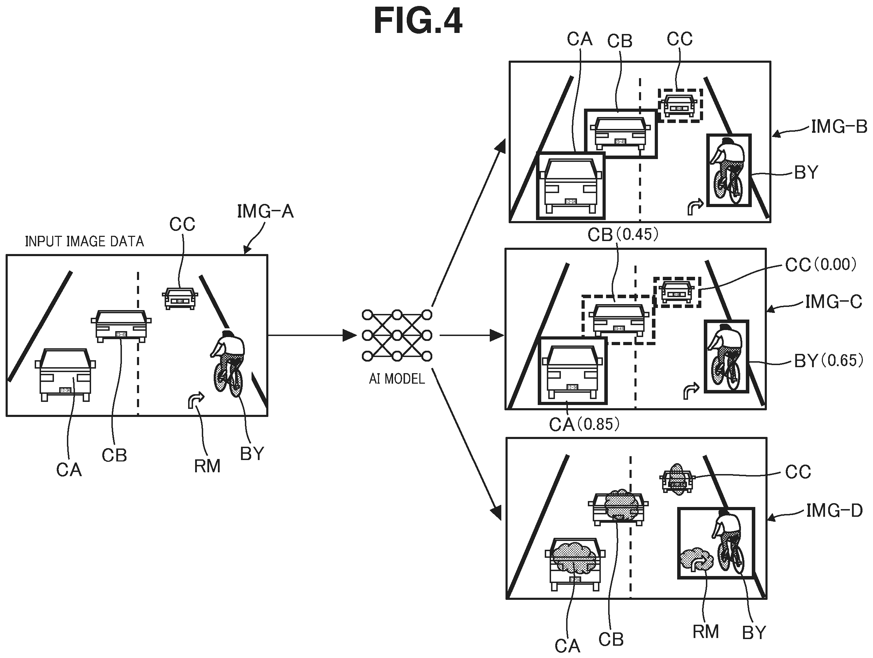

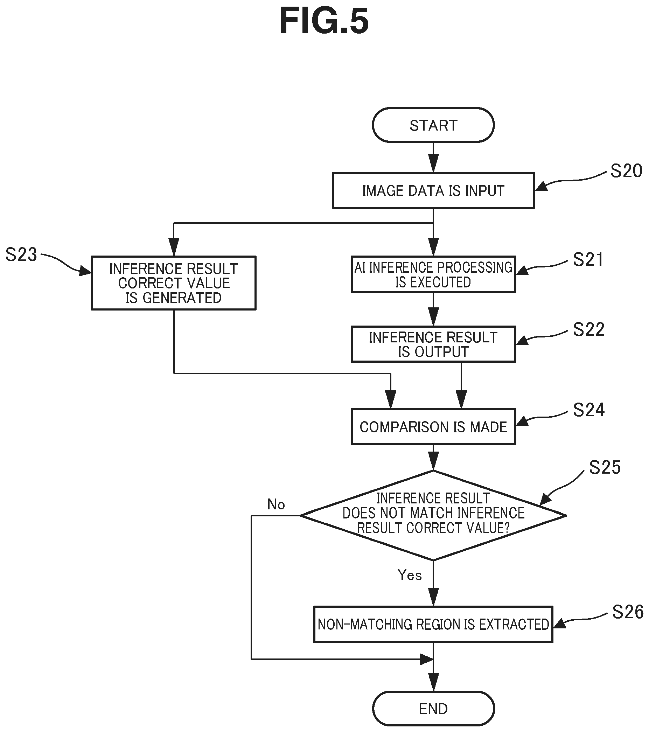

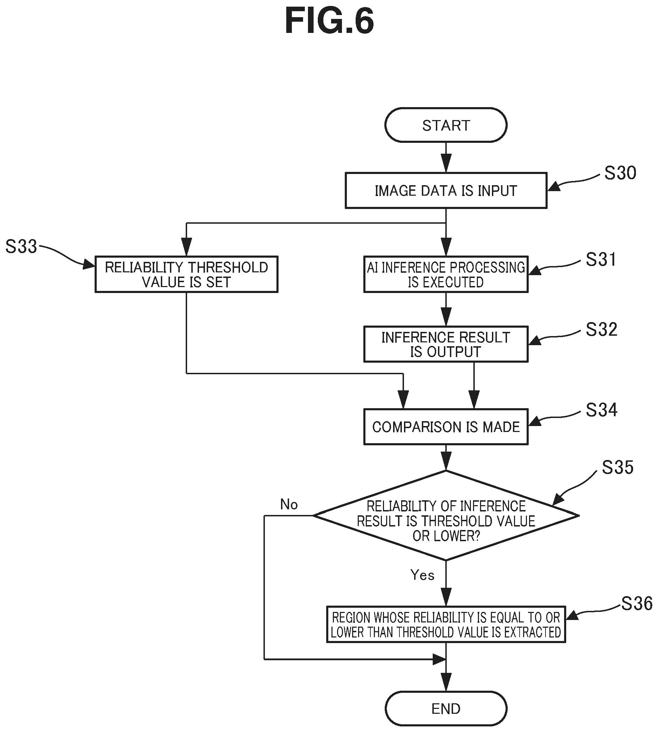

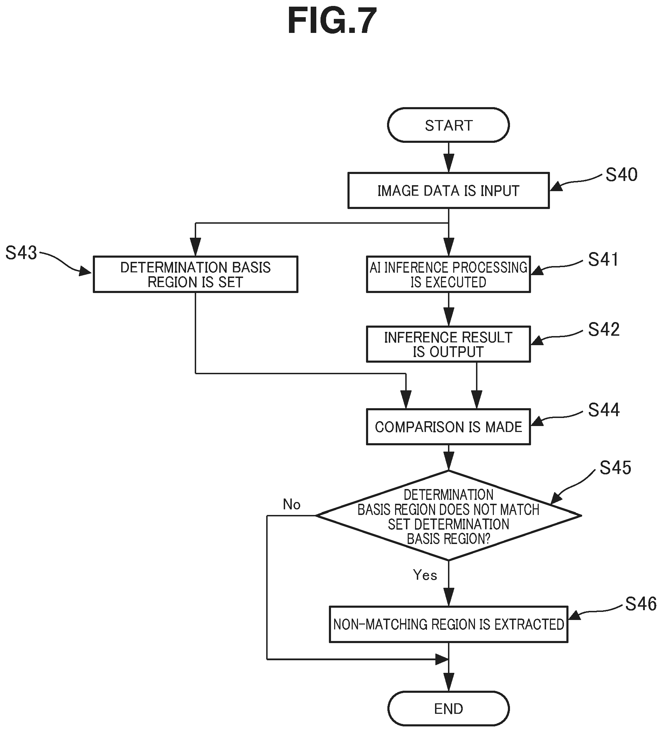

First, a specific determination method for the verification steps S11 and S12 will be described with reference to Figs. 4 to 7. Fig. 4 visually illustrates a state in which input image data is subjected to inference processing and is set in a feature amount extraction region. Fig. 5 illustrates a process flow for determining necessity of improvement based on an inference result. Fig. 6 illustrates a process flow for determining necessity of improvement based on reliability. Fig. 7 illustrates a process flow for determining necessity of improvement based on a determination basis (or determination grounds).

In FIG. 4, in input image data IMG-A input at a certain time, as objects (targets), a vehicle CA, a vehicle CB, and a vehicle CC are present toward the back side of the screen. Similarly, a bicycle BY is present on the front side of the screen. Also, a road marking RM indicating a right turn is drawn on the road.

When inference processing is performed on such input image data using the AI model, image data IMG-B shows an output state of an inference result of the objects (the targets). Since the vehicle CA, the vehicle CB, and the bicycle BY are recognized, they are inferred correctly, but there is a possibility that the vehicle CC is not inferred correctly. Therefore, new image data for correctly inferring the vehicle CC is required.

Furthermore, when inference processing is performed using the AI model, image data IMG-C shows an output state of reliability. Since the reliability of the vehicle CA and the bicycle BY exceeds a threshold value (here, which is set to 0.50), they are inferred correctly. However, since the reliability of the vehicle CB does not exceed the threshold value, there is a possibility that the vehicle CB is not inferred correctly. Therefore, new image data for correctly inferring the vehicle CB is required. Here, since the vehicle CC is not inferred correctly in the inference result, it is an undetected vehicle.

In addition, when inference processing is performed using the AI model, image data IMG-D shows an output state of a determination basis (or determination grounds) of the objects (the targets). The determination bases of the vehicle CA, the vehicle CB, and the vehicle CC correspond to the respective vehicles. However, for the bicycle BY, the determination basis of the road marking RM is output, and thus there is a possibility that the determination basis is not correctly inferred. Therefore, new image data for correctly inferring the determination basis of the bicycle BY is required.

Next, methods for deriving each of the above inference results will be described using control flows. Figs. 5 to 7 show process flows for determining the necessity of improvement based on the inference results.

Fig. 5 is a determination process flow for the inference result of the object (the target). Each processing step will be described below.

<<Step S20>>

In step S20, the unit inputs image data that may have not been subjected to the inference processing correctly from the input data acquisition unit 12C. When the image data is input, the process in step S21 is executed.

<<Step S21>>

In step S21, an inference processing of the object (the target) is executed based on the input image data. For this inference, "class information" of the object (the target) and "position information" of the object (the target) are inferred. The "class information" is information on whether the object (the target) is a vehicle, a motorcycle, a pedestrian, etc. The "position information" is coordinate information on an area (a region) surrounding the object (the target). When the inference processing of the object (the target) is performed, the process of step S22 is executed.

<<Step S22>>

In step S22, the unit outputs an inference result of the object (the target) inferred in step S21. This output of the inference result is executed for all objects (all targets) in the image data. When the inference result is output, the process of step S24 is executed. However, the process of step S23 is also executed in parallel.

<<Step S23>>

In step S23, an inference result correct value for each object (each target) is generated by the developer or the designer. The inference result correct value is class information on the object (the target) and position information on the object (the target), and corresponds to the "class information" and the "position information" of the object (the target) inferred in step S21. The generated inference result correct value is compared with the class information and the position information on the object (the target) inferred in step S21.

<<Step S24>> and <<Step S25>>

In step S24, the inference result of the object (the target) of the image data output in step S22 and the inference result correct value of the object (the target) generated in step S23 are compared with each other.

As a result of the comparison, if the inference result and the inference result correct value match (NO determination), the process exits to the end. If they do not match (YES determination), the process of step S26 is executed. Returning to the image data IMG-B in Fig. 4, the vehicle CA, the vehicle CB, and the bicycle BY are objects (targets) whose inference results and correct values match, whereas the vehicle CC is an object (a target) whose inference result and inference result correct value do not match.

<<Step S26>>

In step S26, a non-matching region of the object (the target) determined as non-match is extracted. This non-matching region becomes the feature amount extraction region described above. As shown in image data IMG-B in Fig. 4, the vehicle CC is the object (the target) whose inference result and correct value do not match. Then, a feature amount of image data of the extracted non-matching region is extracted by the feature amount extraction unit 13B. When the non-matching region is extracted, the process exits to the end.

Next, Fig. 6 is a determination process flow for the reliability of the object (the target). Each processing step will be described below.

<<Step S30>>

In step S30, the unit inputs image data that may have not been subjected to the inference processing correctly from the input data acquisition unit 12C. When the image data is input, the process in step S31 is executed.

<<Step S31>>

In step S31, an inference processing of the object (the target) is executed based on the input image data. For this inference, "reliability" of the object (the target) is inferred. The "reliability" is numerical information that indicates a degree of confidence with which the inference is performed. When the inference processing of the object (the target) is performed, the process of step S32 is executed.

<<Step S32>>

In step S32, the unit outputs the reliability of the object (the target) inferred in step S31. This output of the reliability is executed for all objects (all targets) in the image data. When the reliability is output, the process of step S34 is executed. However, the process of step S33 is also executed in parallel.

<<Step S33>>

In step S33, a reliability threshold value is set by the developer or the designer. The reliability threshold value is set to a lower limit value (here, which is set to 0.50) of the reliability when recognizing the object (the target) included in the image data. The reliability threshold value could also be set for each object (each target). The set reliability threshold value is compared with the reliability of the object (the target) output in step S32.

<<Step S34>> and <<Step S35>>

In step S34, the reliability of the object (the target) of the image data output in step S32 and the reliability threshold value of the object (the target) set in step S33 are compared with each other.
As a result of the comparison, if the reliability in step S32 exceeds the reliability threshold value (NO determination), the process exits to the end. If the reliability in step S32 is lower than the reliability threshold value (YES determination), the process of step S36 is executed. Returning to the image data IMG-C in Fig. 4, since the reliability of the vehicle CA and the bicycle BY is 0.50 or more, they are objects (targets) whose reliability exceeds the reliability threshold value. Since the reliability of the vehicle CB is 0.45, it is an object (a target) whose reliability is lower than the reliability threshold value.

<<Step S36>>

In step S36, a region of the object (the target) whose reliability is lower than the reliability threshold value is extracted. This region becomes the feature amount extraction region described above. As shown in image data IMG-C in Fig. 4, the vehicle CB is the object (the target) whose reliability is lower than the reliability threshold value. Then, a feature amount of image data of the extracted region is extracted by the feature amount extraction unit 13B. When the region whose reliability is lower than the reliability threshold value is extracted, the process exits to the end.
Next, Fig. 7 is a determination process flow for a notable region (a determination basis region) for recognizing an object (a target). Each processing step will be described below.

<<Step S40>>

In step S40, the unit inputs image data that may have not been subjected to the inference processing correctly from the input data acquisition unit 12C. When the image data is input, the process in step S41 is executed.

<<Step S41>>

In step S41, an inference processing of the object (the target) is executed based on the input image data. For this inference, a "determination basis region" of the object (the target) is inferred. The "determination basis region" is information on a region to be focused on in order to recognize the object (the target). When the inference processing of the object (the target) is performed, the process of step S42 is executed.

<<Step S42>>

In step S42, the unit outputs the determination basis region of the object (the target) inferred in step S41. This determination basis region is a region that was focused on when the object (the target) was inferred by the inference. This output of the determination basis region is executed for all objects (all targets) in the image data. When the determination basis region is output, the process of step S44 is executed. However, the process of step S43 is also executed in parallel.

<<Step S43>>

In step S43, a determination basis region for each object (each target) is set by the developer or the designer. The determination basis region is set for all objects (all targets) included in the image data. The set determination basis region is compared with the determination basis region of the object (the target) output in step S42.

<<Step S44>> and <<Step S45>>

In step S44, the determination basis region of the object (the target) of the image data output in step S42 and the determination basis region of the object (the target) set in step S43 are compared with each other.

As a result of the comparison, if the determination basis region in step S42 match the set determination basis region (NO determination), the process exits to the end. If they do not match (YES determination), the process of step S46 is executed.

Returning to the image data IMG-D in Fig. 4, the vehicle CA, the vehicle CB, and the vehicle CC are objects (targets) whose determination basis regions in step S42 and set determination basis regions match, whereas the bicycle BY is an object (a target) whose determination basis region in step S42 and set determination basis region do not match. In the case of the bicycle BY, the road marking RM is the determination basis region.

<<Step S46>>

In step S46, a non-matching region of the object (the target) determined as non-match is extracted. This non-matching region becomes the feature amount extraction region described above. As shown in image data IMG-D in Fig. 4, the road marking RM and the bicycle BY are objects (targets) whose determination basis regions do not match. Then, a feature amount of image data of the extracted non-matching region is extracted by the feature amount extraction unit 13B. When the non-matching region is extracted, the process exits to the end.

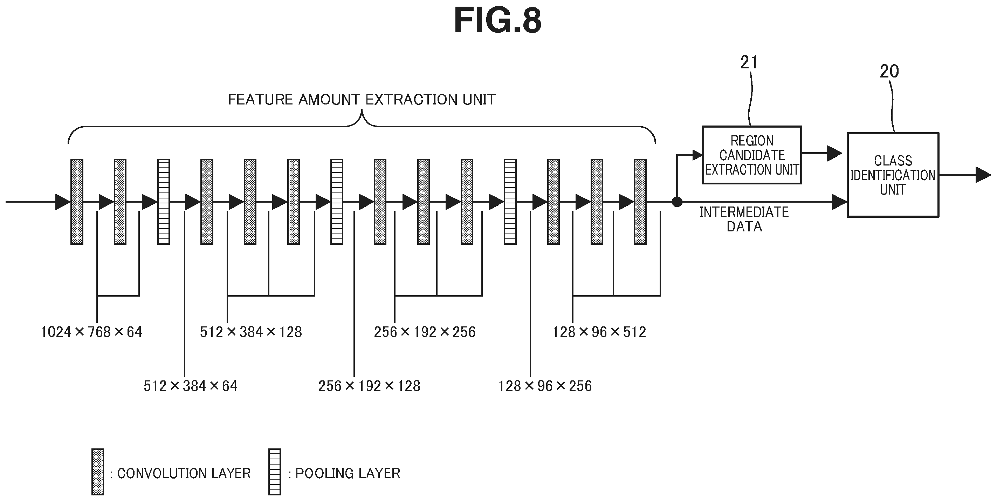

The non-matching region of the image data that needs to be improved is set as a feature amount extraction region, and a feature amount of the object (the target) is extracted. The feature amount may be extracted by various methods. For instance, the feature amount is extracted using intermediate data obtained when image data corresponding to the feature amount extraction region is input to the AI model. This state is illustrated in Fig. 8.

In Fig. 8, the feature amount extraction unit of the AI model is configured from a neural network including a convolution layer and a pooling layer, and the feature amount can be extracted by sequentially passing the input image data through the convolution layer and the pooling layer. In Fig. 8, the number in the image data input to the convolutional layer indicates "the number of horizontal pixels $\times$ the number of vertical pixels $\times$ the number of channels". In the present embodiment, in particular, intermediate data before being input to a class identification unit 20 is extracted as a feature amount by a region candidate extraction unit 21.

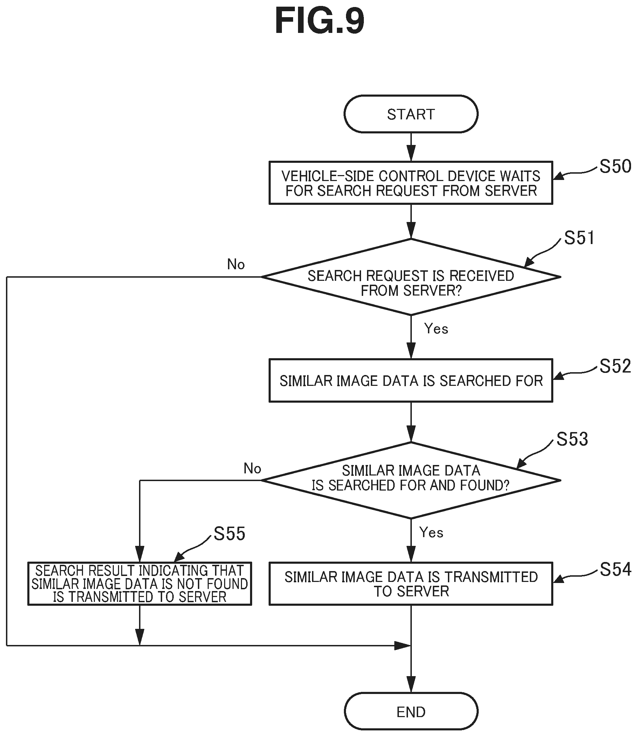

Next, a method of collecting similar image data similar to the extracted feature amount will be described. When a collection request for similar image data is transmitted from the server-side control unit to many other vehicles, many other vehicles receive this transmission request. Upon receiving this collection request, the vehicle-side control device 11 of each vehicle searches for similar image data from among image data stored and held in the vehicle-side control device 11 itself. The process flow of this data search will be described with reference to Fig. 9.

<<Step S50>>

In step S50, the vehicle-side control device 11 waits for a search request for the similar image data from the server 10. In this state, the process of step S51 is executed.

<<Step S51>>

In step S51, it is determined whether or not there is a search request from the server 10. If it is determined that the search request has not been received, the process exits to the end, and the vehicle-side control device 11 waits for the search request for the similar image data from the server 10. On the other hand, if it is determined that the search request has been received from the server 10, the process of step 52 is executed.

<<Step S52>>

In step S52, the vehicle-side control device 11 searches for image data having a feature amount that is similar to the feature amount of the transmitted similar image data, from its own database. In this search process, if the image data having the similar feature amount is found, the process of step S53 is executed. For instance, it is image data having a feature amount similar to the feature amount of the vehicle CC of IMG-B in Fig. 4, a feature amount similar to the feature amount of the vehicle CB of the IMG-C, and feature amounts similar to the feature amounts of the road marking RM and the bicycle BY of IMG-D.

<<Step S53>>

In step S53, if the similar image data is searched for and found (YES determination), the process of step S54 is executed. On the other hand, if the similar image data is not found (NO determination), the process of step S55 is executed.

<<Step S54>>

In step S54, the similar image data found as a result of the search is transmitted to the server 10. When the transmission of the similar image data is completed, the process exits to the end, and the vehicle-side control device 11 waits for the next search request.

<<Step S55>>

In step S55, the search result indicating that the similar image data has not been found is transmitted to the server 10. When the transmission of the search result indicating that the similar image data has not been found is completed, the process exits to the end, and the vehicle-side control device 11 waits for the next search request.

When the server-side control unit of the server 10 receives the similar image data transmitted from the vehicle-side control device 11, the server-side control unit selects the similar image data. Performing the relearning using all the transmitted similar image data is too wasteful and too inefficient. Therefore, the similar image data is selected using similarity of the feature amount as a criterion of determination.

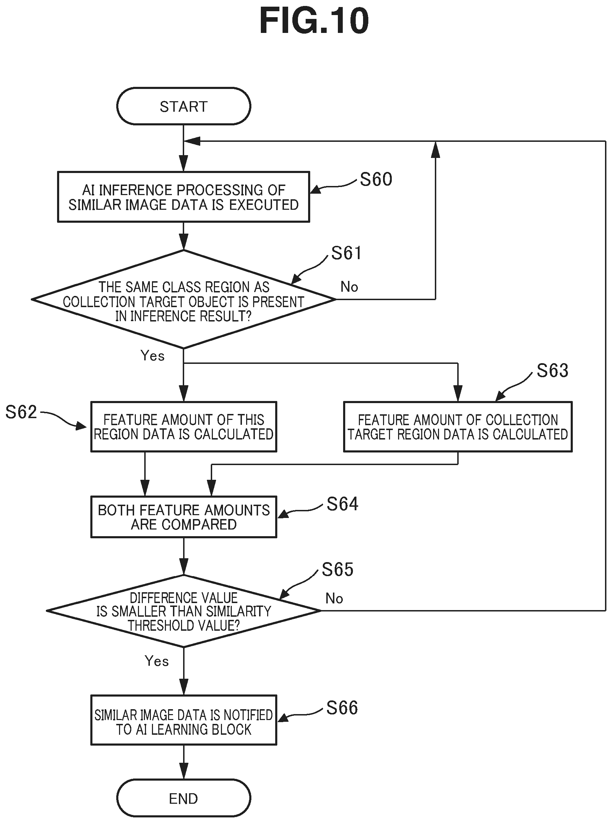

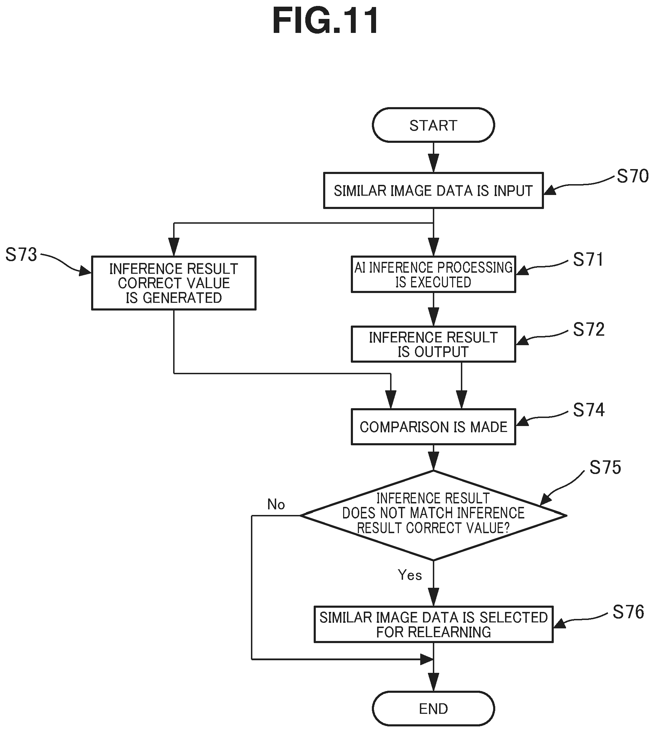

Next, this control flow will be described with reference to Figs. 10 to 13. Fig. 10 shows a control flow for determining the similarity of a feature amount. Figs. 11 to 13 show control flows for selecting image data having a similar feature amount.

First, the control flow for determining the similarity of a feature amount will be described with reference to Fig. 10.

<<Step S60>>

In step S60, the similar image data transmitted from the vehicle-side control device 11 is subjected to the inference processing using the AI model. When the inference processing is completed, the process of step 61 is executed.

<<Step S61>>

In step S61, it is determined whether or not, in a result of the inference processing, there is the same class region as the object (the target) to be collected. In this determination, if it is determined that there is no region of the object (the target) of the same class, the process returns to step S60, and an inference processing of the next similar image data is executed. On the other hand, if it is determined that there is the same class region, the processes of steps S62 and S63 are executed.

<<Step S62>> and <<Step S63>>

In step S62, if it is determined that there is the same class region as the object (the target) to be collected, a feature amount of this region is calculated. When the feature amount is calculated, the process of step 64 is executed. At this time, the process of step S63 is also executed in parallel. In step S63, a feature amount of the image data of the collection target region (the region to be collected) is calculated and set by the developer or the designer. Here, the feature amount is determined based on the following idea.

In the present embodiment, the similarity is determined from a difference between an average value of the pixels of the similar image data calculated in step S62 and an average value of the pixels of the image data of the collection target region. If this similarity is satisfied, the similar image data can be used as a candidate for image data for the relearning.

Since image data can be represented by three elements R/G/B, the image data of the collection target image region in step S63 is expressed as Target_R(i), Target_G(i), and Target_B(i) Here, "i" is the i-th data in the image (i=0 to N-1), and "N" is the number of pixels in the image. Average values of the collection target image region can be calculated by the following "Expression 1".

$$[\text{Expression 1}]$$

$$Target\_R\_ave = \frac{1}{N} \sum_{i=0}^{N-1} Target\_R(i)$$

$$Target\_G\_ave = \frac{1}{N} \sum_{i=0}^{N-1} Target\_G(i)$$

$$Target\_B\_ave = \frac{1}{N} \sum_{i=0}^{N-1} Target\_B(i)$$

Similarly, the similar image data is expressed as Input_R(i) , Input_G(i), and Input_B(i). Average values of the similar image data can be calculated by the following "Expression 2". Here, assuming that an image size of the similar image data is different from the collection target image region, the average values of the similar image data are calculated with the number of pixels in the image being M.

$$[\text{Expression 2}]$$

$$Input\_R\_ave = \frac{1}{M} \sum_{i=0}^{M-1} Input\_R(i)$$

$$Input\_G\_ave = \frac{1}{M} \sum_{i=0}^{M-1} Input\_G(i)$$

$$Input\_B\_ave = \frac{1}{M} \sum_{i=0}^{M-1} Input\_B(i)$$

When the average values of each image data are obtained by "Expression 1" and "Expression 2", the process of step S64 is executed.

<<Step S64>>

In step S64, the feature amounts (the average values of the image data) calculated in step S62 and step S63 are compared, and a difference value (diff) between the two is determined. The difference value (diff) is calculated by the following "Expression 3". This difference value (diff) represents the "similarity".

[Expression 3]

$$diff = (Target\_R\_ave - Input\_R\_ave)^2 + \\ (Target\_G\_ave - Input\_G\_ave)^2 + \\ (Target\_B\_ave - Input\_B\_ave)^2$$

When the difference value (diff) is obtained, the process of step S65 is executed. Here, the method described above is a method of calculating the similarity between the collection target image region and the input image region by the image average value. However, the similarity could be calculated by a method using a histogram or a method using a correlation coefficient.

Furthermore, the above-described method deals with data in which the image data to be compared is composed of three R/G/B images, but data composed of horizontal 128 pixels × vertical 96 pixels × 512 channels indicated by the region candidate extraction unit 21 in Fig. 8 can also be handled in the same manner.

<<Step S65>>

In step S65, it is determined whether the difference value (diff) calculated in step S64 is smaller than a predetermined similarity threshold value. As can be understood from "Expression 3", the smaller the difference value (diff), the greater the similarity. Therefore, if it is determined that the difference value (diff) is smaller than the similarity threshold (YES determination), the process of step S66 is executed. On the other hand, if it is determined that the difference value (diff) is greater than the similarity threshold (NO determination), the routine is returned to step S60, and the sameprocessing steps are executed for the other similar image data.

<<Step S66>>

In step S66, since the difference value (diff) of the feature amount of the similar image data satisfies the given similarity threshold value, the similar image data is regarded as valid as image data for the relearning, and is notified to the AI learning block.

Next, the similar image data considered to be valid is selected by the image selection unit 15A for the relearning. This selection condition is the same as the conditions shown in Figs. 5 to 7. This selection process flow will be described below.

Fig. 11 is a determination process flow for the inference result of the object (the target). Each processing step will be described below.

<<Step S70>>

In step S70, the unit inputs similar image data from the similar image data collection unit 14A. When the similar image data is input, the process in step S71 is executed.

<<Step S71>>

In step S71, an inference processing of the object (the target) is executed based on the input similar image data. For this inference, "class information" of the object (the target) and "position information" of the object (the target) are inferred. The "class information" is information on whether the object (the target) is a vehicle, a motorcycle, a pedestrian, etc. The "position information" is coordinate information on an area (a region) surrounding the object (the target). When the inference processing of the object (the target) is performed, the process of step S72 is executed.

<<Step S72>>

In step S72, the unit outputs an inference result of the object (the target) inferred in step S71. This output of the inference result is executed for all objects (all targets) in the similar image data. When the inference result is output, the process of step S74 is executed. However, the process of step S73 is also executed in parallel.

<<Step S73>>

In step S73, an inference result correct value for each object (each target) is generated by the developer or the designer. The inference result correct value is class information on the object (the target) and position information on the object (the target), and corresponds to the "class information" and the "position information" of the object (the target) inferred in step S71. The generated inference result correct value is compared with the class information and the position information on the object (the target) inferred in step S71.

<<Step S74>> and <<Step S75>>

In step S74, the inference result of the object (the target) of the similar image data output in step S72 and the inference result correct value of the object (the target) generated in step S73 are compared with each other.
As a result of the comparison, if the inference result and the inference result correct value match (NO determination), the process exits to the end. If they do not match (YES determination), the process of step S76 is executed.

<<Step S76>>

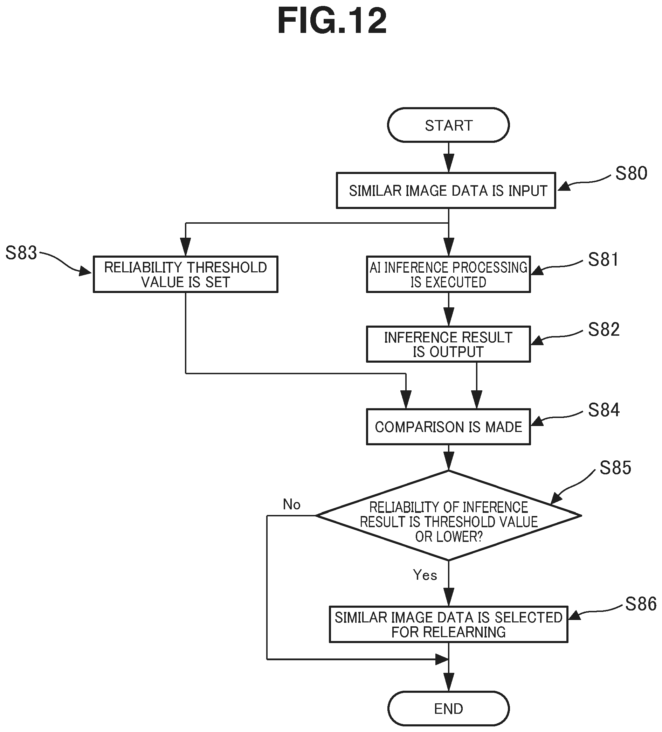

In step S76, the similar image data is selected as image data for the relearning. The selected similar image data is transmitted to the AI learning unit 15B, and the relearning is performed.
Next, Fig. 12 is a determination process flow for the reliability of the object (the target). Each processing step will be described below.

<<Step S80>>

In step S80, the unit inputs similar image data from the similar image data collection unit 14A. When the similar image data is input, the process in step S81 is executed.

<<Step S81>>

In step S81, an inference processing of the object (the target) is executed based on the input similar image data. For this inference, "reliability" of the object (the target) is inferred. The "reliability" is numerical information that indicates a degree of confidence with which the inference is performed. When the inference processing of the object (the target) is performed, the process of step S82 is executed.

<<Step S82>>

In step S82, the unit outputs the reliability of the object (the target) inferred in step S81. This output of the reliability is executed for all objects (all targets) in the similar image data. When the reliability is output, the process of step S84 is executed. However, the process of step S83 is also executed in parallel.

<<Step S83>>

In step S83, a reliability threshold value is set for each object (each target) by the developer or the designer. The reliability threshold value is set to a lower limit value of the reliability when recognizing the object (the target) included in the similar image data. The set reliability threshold value is compared with the reliability of the object (the target) output in step S82.

<<Step S84>> and <<Step S85>>

In step S84, the reliability of the object (the target) of the similar image data output in step S82 and the reliability threshold value of the object (the target) set in step S83 are compared with each other.
As a result of the comparison, if the reliability in step S82 exceeds the reliability threshold value (NO determination), the process exits to the end. If the reliability in step S82 is lower than the reliability threshold value (YES determination), the process of step S86 is executed.

<<Step S86>>

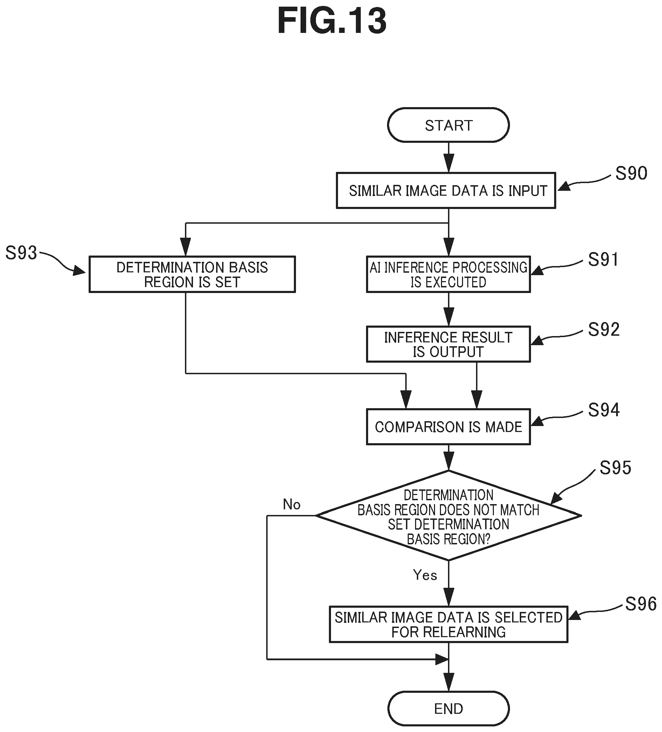

In step S86, the similar image data is selected as image data for the relearning. The selected similar image data is transmitted to the AI learning unit 15B, and the relearning is performed.
Next, Fig. 13 is a determination process flow for a notable region (a determination basis region) for recognizing an object (a target). Each processing step will be described below.

<<Step S90>>

In step S90, the unit inputs similar image data from the similar image data collection unit 14A. When the similar image data is input, the process in step S91 is executed.

<<Step S91>>

In step S91, an inference processing of the object (the target) is executed based on the input similar image data. For this inference, a "determination basis region" of the object (the target) is inferred. The "determination basis region" is information on a region to be focused on in order to recognize the object (the target). When the inference processing of the object (the target) is performed, the process of step S92 is executed.

<<Step S92>>

In step S92, the unit outputs the determination basis region of the object (the target) inferred in step S91. This determination basis region is a region that was focused on when the object (the target) was inferred by the inference. This output of the determination basis region is executed for all objects (all targets) in the similar image data. When the determination basis region is output, the process of step S94 is executed. However, the process of step S93 is also executed in parallel.

<<Step S93>>

In step S93, a determination basis region for each object (each target) is set by the developer or the designer. The determination basis region is set for all objects (all targets) included in the similar image data. The set determination basis region is compared with the determination basis region of the object (the target) output in step S92.

<<Step S94>> and <<Step S95>>

In step S94, the determination basis region of the object (the target) of the similar image data output in step S92 and the determination basis region of the object (the target) set in step S93 are compared with each other.
As a result of the comparison, if the determination basis region in step S92 match the set determination basis region (NO determination), the process exits to the end. If they do not match (YES determination), the process of step S96 is executed.

<<Step S96>>

In step S96, the similar image data is selected as image data for the relearning. The selected similar image data is transmitted to the AI learning unit 15B, and the relearning is performed.
When the selection of the image data for the relearning according to Figs. 11 to 13 is completed, the relearning according to step S16 in Fig. 3 is performed. Then, when this relearning is completed, it is verified whether or not the inference result has been improved in step S17.
Here, as to whether the inference result has been improved (as to the presence or absence of improvement in the inference result) in step S17, by re-executing the process flows of Figs. 11 to 13, if the inference result after the learning matches a separately specified inference result output correct value, or if the reliability after the learning exceeds a separately specified reliability threshold value, or if the determination basis region matches a determination basis region correct value, it is determined that the inference result has been improved (improvement in the inference result has been made).
With the above configuration, for the input data whose AI inference processing was not performed correctly, the feature amount of this input data is extracted, and the similar data that is similar to this feature amount is collected from the other and relearned, thereby appropriately collecting necessary image data.

**Second Embodiment**

Next, a second embodiment according to the present invention will be described. In the embodiment described above, the AI inference block 12, the AI verification block 13, the learning data candidate collection block 14 and the AI learning block 15 are provided in the server-side control unit of the server 10.
In contrast to this, in the second embodiment, the AI inference block 12 and the learning data candidate collection block 14 are provided in the vehicle-side control device 11, whereas the AI verification block 13 and the AI learning block 15 are provided in the server-side control unit. Here, the AI inference block 12 includes an AI inference result correctness determination unit 12D that determines whether the inference result is correct or incorrect. Therefore, image data with incorrect inference is input to the AI verification unit 13A.

The AI inference block 12 and the learning data candidate collection block 14 provided in the vehicle-side control device 11, and the AI verification block 13 and the AI learning block 15 provided in the server-side control unit of the server 10, perform the same functions and operations as those of the first embodiment.

In the present invention having the above-described configuration, an AI model learning system for relearning an AI model includes: an AI inference processing unit configured to perform inference processing of input data using the AI model; an AI verification unit configured to acquire the input data, as consideration data, when the inference processing by the AI inference processing unit is not correctly performed; a feature amount extraction unit configured to extract a feature amount of the consideration data; a similar data collection unit configured to collect similar data that is similar to the feature amount; and an AI learning unit configured to relearn the AI model using the similar data collected by the similar data collection unit.

According to the present invention, for the input data whose AI inference processing was not performed correctly, the feature amount of this input data is extracted, and the similar data that is similar to this feature amount is collected from the other and relearned, thereby appropriately collecting necessary image data.

The present invention is not limited to the embodiments described above, but includes various modifications. Embodiments described above have been described in detail to easily understand the present invention, and the present invention does not necessarily have all configurations or elements. Furthermore, a part of the configuration of one embodiment could be replaced with the configuration of the other embodiment. Also, the configuration of the other embodiment may be added to the configuration of one embodiment. In addition, for the configuration of each embodiment, it is possible to add, delete and replace the configuration of the other embodiment.

**Claims**

1. An AI model learning system for relearning an AI model, comprising:

   an AI inference processing unit configured to perform inference processing of input data using the AI model;
   an AI verification unit configured to acquire the input data, as consideration data, when the inference processing by the AI inference processing unit is not correctly performed;
   a feature amount extraction unit configured to extract a feature amount of the consideration data;
   a learning data candidate collection unit configured to collect similar data that is similar to the feature amount; and
   an AI learning unit configured to relearn the AI model using the similar data collected by the learning data candidate collection unit.

2. The AI model learning system as claimed in claim 1, wherein
   the AI verification unit is configured to, if an inference result when the input data is input to the AI model is different from a separately specified inference result correct value, set a region of the input data as a feature amount extraction region.

3. The AI model learning system as claimed in claim 1, wherein
   the AI verification unit is configured to, if reliability when the input data is input to the AI model is lower than a separately specified reliability threshold value, set a region of the input data as a feature amount extraction region.

4. The AI model learning system as claimed in claim 1, wherein
   the AI verification unit is configured to, if a determination basis region when the input data is input to the AI model is different from a separately specified determination basis region correct value, set the determination basis region as a feature amount extraction region.

5. The AI model learning system as claimed in any one of the preceding claims 2 to 4, wherein
   the feature amount extraction unit is configured to extract the feature amount using the input data corresponding to the feature amount extraction region.

6. The AI model learning system as claimed in any one of the preceding claims 2 to 4, wherein
   the feature amount extraction unit is configured to extract the feature amount using intermediate data obtained when the input data corresponding to the feature amount extraction region is input to the AI model.

7.  The AI model learning system as claimed in claim 5, wherein
    the learning data candidate collection unit is configured to, if there is a region in which similarity with the feature amount exceeds a separately specified similarity threshold value, output the similar data to the AI learning unit.

8.  The AI model learning system as claimed in claim 7, wherein
    the AI learning unit is configured to, when the similar data is input to the AI model, if the inference result is different from the inference result correct value, or if the reliability is lower than the reliability threshold value, or if the determination basis region is different from the determination basis region correct value, select the similar data as learning data.

9.  An AI model learning method for relearning an AI model, comprising:

    executing AI inference process of performing AI inference of input data;
    executing AI verification process of verifying an inference result of the AI inference;
    executing improvement necessity determination process of determining necessity of improvement in the inference result;
    executing feature amount extraction process of extracting a feature amount of the input data when the improvement is determined to be necessary;
    executing similar data collection process of collecting similar data that is similar to the extracted feature amount; and
    executing AI learning process of performing relearning using the similar data.

10. The AI model learning method as claimed in claim 9, further comprising

    after the relearning by the AI learning process, executing improvement presence/absence determination process of determining whether or not the AI inference has been improved,
    wherein, in the improvement presence/absence determination process, if the inference result after the relearning matches a separately specified inference result output correct value, or if reliability after the learning exceeds a separately specified reliability threshold value, or if a determination basis region matches a determination basis region correct value, it is determined that the AI inference has been improved.

11. An AI model learning system for relearning an AI model for autonomously driving a vehicle, the AI model learning system comprising:

    an AI inference function unit configured to perform inference processing of image data transmitted from the vehicle, using the AI model;
    an AI verification function unit configured to set, as a feature amount acquisition region, an object of the image data when the inference processing by the AI inference function unit is not correctly performed;
    a feature amount extraction function unit configured to extract a feature amount of the image data of the feature amount acquisition region;
    a similar image data collection function unit configured to request a plurality of other vehicles to collect similar image data that is similar to the feature amount, and configured to collect the similar image data from said other vehicles; and
    an AI learning function unit configured to relearn the AI model using the similar image data collected by the similar image data collection function unit.

12. The AI model learning system as claimed in claim 11, wherein

    the AI inference function unit includes an AI inference processing unit, and an AI inference defect candidate detection unit,
    the AI inference processing unit is configured to infer a candidate for image data that is likely to be the object from among input image data, and configured to send the image data of the candidate to the AI inference defect candidate detection unit,
    the AI inference defect candidate detection unit is configured to detect the image data that may have not been subjected to the inference processing correctly, and configured to input said image data to the AI verification function unit,
    the AI verification function unit includes an AI verification unit, and a feature amount extraction unit,
    the AI verification unit is configured to determine whether or not the object of the image data that may have not been subjected to the inference processing correctly is different from a correct value, and whether or not said object satisfies a threshold value, and configured to, if it is determined that said object is different from the correct value, and that said object does not satisfy the threshold value, set a region where said object exists, as a feature amount extraction region,

the feature amount extraction unit is configured to extract a feature amount of the object from image data of the set feature amount extraction region, and configured to input said feature amount to the similar image data collection function unit,

the similar image data collection function unit is configured to wirelessly transmit said feature amount from the feature amount extraction unit to vehicle-side control devices of the plurality of other vehicles each equipped with an autonomous driving device,

each vehicle-side control device is configured to search for similar image data having a feature amount that is similar to the transmitted feature amount, from among image data stored in a storage unit of the vehicle-side control device, and configured to wirelessly transmit said similar image data to the similar image data collection function unit,

the similar image data collection function unit is configured to input the received similar image data to the AI learning function unit,

the AI learning function unit includes an image selection unit, an AI learning unit, and an AI update unit,

the image selection unit is configured to select, as learning data, the similar image data transmitted from the similar image data collection function unit, and configured to input said similar image data to the AI learning unit,

the AI learning unit is configured to relearn the AI model using the selected similar image data, and

the AI update unit is configured to update the AI model.

13. The AI model learning system as claimed in claim 12, wherein

the vehicle-side control device includes, on condition that consent of an user is obtained in advance, an image data storage function unit configured to store the image data that is input to the AI verification function unit, and further includes, when an AI model of the vehicle-side control device is updated by the AI model relearned in the AI learning function unit, an effect confirmation function unit, by which an effect of improvement in the stored image data by the updated AI model can be confirmed by the user.

14. The AI model learning system as claimed in claim 12, wherein

the AI inference function unit and the similar image data collection function unit are provided in the vehicle-side control device, and

the AI verification function unit and the AI learning function unit are provided in a server-side control unit of a server.

# FIG.1

SERVER — 10

**EVALUATION · VERIFICATION FUNCTION**
**(MODEL ANALYSIS · VISUALIZATION)**

· PERFORM VERIFICATION OF RECEIVED IMAGE DATA BY AI MODEL, AND EXTRACT SCENE THAT CANNOT BE CORRECTLY INFERRED BY AI MODEL
· EXTRACT FEATURE AMOUNT OF SCENE, AND REQUEST COLLECTION OF SIMILAR DATA

10A

AI MODEL

| | IMG.1 | IMG.2 | IMG.3 | ··· |
|---|---|---|---|---|
| GAZE AREA SOLID LINE : INFERRED VALUE BROKEN LINE : CORRECT VALUE | DEVIATION : SMALL | DEVIATION : LARGE | DEVIATION : MEDIUM | ··· |
| CERTAINTY | 0.92 | 0.51 | 0.76 | ··· |

**RELEARNING FUNCTION**
**(UTILIZATION OF ANALYSIS RESULT)**

· ACQUIRE SIMILAR DATA (RELEARNING DATA) FROM VEHICLE
· PERFORM RELEARNING USING SIMILAR DATA

(4) UPDATE AI MODEL

AI MODEL

COMPARISON

TEACHER INFORMATION OF GAZE AREA

(2) FEATURE AMOUNT DATA

(3) DATA COLLECTION
ACQUIRE SIMILAR IMAGE DATA SIMILAR TO FEATURE AMOUNT DATA TRANSMITTED FROM SERVER

(1) VEHICLE DATA
IMAGE DATA (OF CANDIDATE) WHEN AI MODEL MISRECOGNIZED

(4) UPDATE AI MODEL

VEHICLE-SIDE CONTROL DEVICE — 11

EP 4 779 583 A1

# FIG.2

EP 4 779 583 A1

# FIG.3

START

AI INFERENCE IS EXECUTED — S10

AI VERIFICATION IS EXECUTED — S11

S12
No ← IMPROVEMENT IS NECESSARY?

Yes

FEATURE AMOUNT IS EXTRACTED — S13

COLLECTION OF SIMILAR IMAGE DATA IS REQUESTED — S14

SIMILAR IMAGE DATA IS COLLECTED AND SELECTED — S15

VEHICLE-SIDE CONTROL DEVICE · · ·

AI RELEARNING IS EXECUTED — S16

S17
No ← IMPROVEMENT IS MADE?

Yes

END

# FIG.4

INPUT IMAGE DATA

IMG-A

CC
CA
CB
RM
BY

AI MODEL

CA CB CC
IMG-B
BY
CB(0.45)

CC(0.00)
IMG-C
BY(0.65)
CA(0.85)

CC
IMG-D
CA CB
RM BY

EP 4 779 583 A1

# FIG.5

START

IMAGE DATA IS INPUT — S20

S23 — INFERENCE RESULT CORRECT VALUE IS GENERATED

AI INFERENCE PROCESSING IS EXECUTED — S21

INFERENCE RESULT IS OUTPUT — S22

COMPARISON IS MADE — S24

S25 — INFERENCE RESULT DOES NOT MATCH INFERENCE RESULT CORRECT VALUE?

No

Yes

NON-MATCHING REGION IS EXTRACTED — S26

END

# FIG.6

START

IMAGE DATA IS INPUT — S30

S33 — RELIABILITY THRESHOLD VALUE IS SET

AI INFERENCE PROCESSING IS EXECUTED — S31

INFERENCE RESULT IS OUTPUT — S32

COMPARISON IS MADE — S34

RELIABILITY OF INFERENCE RESULT IS THRESHOLD VALUE OR LOWER? — S35

No

Yes

REGION WHOSE RELIABILITY IS EQUAL TO OR LOWER THAN THRESHOLD VALUE IS EXTRACTED — S36

END

# FIG.7

```
                    ┌─────────────┐
                    │    START    │
                    └──────┬──────┘
                           │
                           ▼
              ┌──────────────────────┐
              │  IMAGE DATA IS INPUT  │◄────── S40
              └──────────┬───────────┘
                         │
         ┌───────────────┼──────────────────┐
         ▼               │                  ▼
┌──────────────────┐     │        ┌──────────────────────┐
│ DETERMINATION    │     │        │ AI INFERENCE         │◄─── S41
│ BASIS REGION IS  │     │        │ PROCESSING IS        │
│ SET              │     │        │ EXECUTED             │
└────────┬─────────┘     │        └──────────┬───────────┘
   S43 ──┘               │                   │
         │               │                   ▼
         │               │        ┌──────────────────────┐
         │               │        │  INFERENCE RESULT     │◄─── S42
         │               │        │  IS OUTPUT            │
         │               │        └──────────┬───────────┘
         │               │                   │
         └───────────────┼───────────────────┤
                         ▼                    │
              ┌──────────────────────┐        │
              │  COMPARISON IS MADE   │◄──── S44
              └──────────┬───────────┘
                         │
                         ▼
              ╱────────────────────╲
    No      ╱   DETERMINATION        ╲ ◄──── S45
    ◄──────┤  BASIS REGION DOES NOT    ├
           │  MATCH SET DETERMINATION  │
            ╲  BASIS REGION?          ╱
              ╲────────────────────╱
                         │ Yes
                         ▼
         ┌──────────────────────────────┐
         │ NON-MATCHING REGION IS        │◄─── S46
         │ EXTRACTED                     │
         └──────────────┬───────────────┘
                        │
                        ▼
                 ┌─────────────┐
                 │     END     │
                 └─────────────┘
```

24

# FIG.8

FEATURE AMOUNT EXTRACTION UNIT

21

REGION CANDIDATE EXTRACTION UNIT

20

CLASS IDENTIFICATION UNIT

INTERMEDIATE DATA

1024 × 768 × 64

512 × 384 × 128

256 × 192 × 256

128 × 96 × 512

512 × 384 × 64

256 × 192 × 128

128 × 96 × 256

▨ : CONVOLUTION LAYER       ▥ : POOLING LAYER

EP 4 779 583 A1

# FIG.9

START

VEHICLE-SIDE CONTROL DEVICE WAITS
FOR SEARCH REQUEST FROM SERVER — S50

SEARCH REQUEST IS RECEIVED
FROM SERVER? — S51

No

Yes

SIMILAR IMAGE DATA IS SEARCHED FOR — S52

SIMILAR IMAGE DATA
IS SEARCHED FOR AND FOUND? — S53

No

Yes

SEARCH RESULT INDICATING THAT
SIMILAR IMAGE DATA IS NOT FOUND
IS TRANSMITTED TO SERVER — S55

SIMILAR IMAGE DATA IS TRANSMITTED
TO SERVER — S54

END

# FIG.10

```
                    START

        AI INFERENCE PROCESSING OF         S60
        SIMILAR IMAGE DATA IS EXECUTED

                                                  S61
           THE SAME CLASS REGION AS
        COLLECTION TARGET OBJECT IS PRESENT      No
              IN INFERENCE RESULT?

                   Yes
                                                        S63
  S62    FEATURE AMOUNT OF THIS      FEATURE AMOUNT OF COLLECTION
         REGION DATA IS CALCULATED   TARGET REGION DATA IS CALCULATED

              BOTH FEATURE AMOUNTS        S64
              ARE COMPARED

                                           S65
              DIFFERENCE VALUE
           IS SMALLER THAN SIMILARITY     No
              THRESHOLD VALUE?

                   Yes

           SIMILAR IMAGE DATA IS NOTIFIED   S66
              TO AI LEARNING BLOCK

                    END
```

# FIG.11

START

SIMILAR IMAGE DATA IS INPUT — S70

INFERENCE RESULT
CORRECT VALUE
IS GENERATED — S73

AI INFERENCE PROCESSING
IS EXECUTED — S71

INFERENCE RESULT
IS OUTPUT — S72

COMPARISON IS MADE — S74

INFERENCE RESULT
DOES NOT MATCH INFERENCE
RESULT CORRECT VALUE? — S75

No

Yes

SIMILAR IMAGE DATA IS SELECTED
FOR RELEARNING — S76

END

# FIG.12

# FIG.13

START

SIMILAR IMAGE DATA IS INPUT — S90

DETERMINATION BASIS REGION IS SET — S93

AI INFERENCE PROCESSING IS EXECUTED — S91

INFERENCE RESULT IS OUTPUT — S92

COMPARISON IS MADE — S94

DETERMINATION BASIS REGION DOES NOT MATCH SET DETERMINATION BASIS REGION? — S95

No

Yes

SIMILAR IMAGE DATA IS SELECTED FOR RELEARNING — S96

END

# FIG.14

## INTERNATIONAL SEARCH REPORT

| International application No. |
|---|
| **PCT/JP2024/025659** |

**A. CLASSIFICATION OF SUBJECT MATTER**

*G06V 10/774*(2022.01)i; *G06N 20/00*(2019.01)i; *G06T 7/00*(2017.01)i; *G06V 10/82*(2022.01)i; *G08G 1/16*(2006.01)i
FI: G06V10/774; G06T7/00 350C; G06V10/82; G06N20/00 130; G08G1/16 A

According to International Patent Classification (IPC) or to both national classification and IPC

**B. FIELDS SEARCHED**

Minimum documentation searched (classification system followed by classification symbols)

G06V10/774; G06N20/00; G06T7/00; G06V10/82; G08G1/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-119322 A (OLYMPUS CORPORATION) 06 August 2020 (2020-08-06) paragraphs [0080]-[0156], fig. 1-11 | 1-3, 5-7, 9 |
| Y | | 10 |
| A | | 4, 8, 11-14 |
| Y | JP 2011-059810 A (NIPPON SOKEN, INC.) 24 March 2011 (2011-03-24) paragraphs [0065]-[0089], fig. 1-11 | 10 |
| A | | 4, 8, 11-14 |
| A | JP 2018-163524 A (HITACHI HIGH-TECHNOLOGIES CORPORATION) 18 October 2018 (2018-10-18) entire text, all drawings | 4, 8, 11-14 |
| A | WO 2022/024803 A1 (SONY GROUP CORPORATION) 03 February 2022 (2022-02-03) entire text, all drawings | 4, 8, 11-14 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 August 2024** | **27 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

INTERNATIONAL SEARCH REPORT
Information on patent family members

| International application No. |
| :-- |
| **PCT/JP2024/025659** |

| Patent document cited in search report | | | Publication date (day/month/year) | Patent family member(s) | | | Publication date (day/month/year) |
| :-- | :-- | :-- | :-- | :-- | :-- | :-- | :-- |
| JP | 2020-119322 | A | 06 August 2020 | US 2020/0242154 A1 paragraphs [0100]-[0176], fig. 1-11 | | | |
| JP | 2011-059810 | A | 24 March 2011 | (Family: none) | | | |
| JP | 2018-163524 | A | 18 October 2018 | US 2020/0134355 A1 entire text, all drawings | | | |
| | | | | WO 2018/180562 A1 | | | |
| | | | | KR 10-2019-0103283 A | | | |
| | | | | CN 110352431 A | | | |
| WO | 2022/024803 | A1 | 03 February 2022 | US 2023/0289980 A1 entire text, all drawings | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022107595 A